# EUROPEAN PATENT SPECIFICATION

(11) **EP 2 704 358 B1**
(45) Date of publication and mention of the grant of the patent: **15.02.2017**
(21) Application number: 12855499.5
(22) Date of filing: 06.12.2012
(51) Int. Cl.: H04L 12/24, H04W 4/14, H04W 24/02, H04L 29/08

(54) **METHOD AND DEVICE FOR MANAGING MOBILE BROADBAND DEVICE**
VERFAHREN UND VORRICHTUNG ZUR VERWALTUNG EINER MOBILEN BREITBANDVORRICHTUNG
PROCÉDÉ ET DISPOSITIF POUR LA GESTION D'UN DISPOSITIF À LARGE BANDE MOBILE

(30) Priority: 09.12.2011 CN 201110409157
(43) Date of publication of application: 05.03.2014
(73) Proprietor: Huawei Device Co., Ltd., Shenzhen, Guangdong 518129 (CN)
(72) Inventor: ZHONG, Zhen, Shenzhen Guangdong 518129 (CN)
(74) Representative: Thun, Clemens
(86) International application number: PCT/CN2012/086030
(87) International publication number: WO 2013/083056

(56) References cited:
- CN-A- 101 599 985
- CN-A- 101 674 569
- CN-A- 102 098 808
- CN-A- 102 158 350
- CN-A- 102 158 350
- CN-A- 102 523 276
- US-A1- 2004 236 823
- US-A1- 2008 301 266

## Description

### TECHNICAL FIELD

The present invention relates to the field of communication technologies, and in particular, relates to a method, a device, and a system for managing a mobile broadband device.

### BACKGROUND

Mobile broadband is a new field booming in recent years, and a 3G data card and a 3G router are typical mobile broadband devices. At present, all mobile broadband devices represented by data cards are provided with PC client software for managing the data cards, so that the data cards implement services such as dial-up access, short message service, and phone book. A conventional Web mode for managing a data card solves problems that use of PC client software requires cross-platform support of an OS (Operating System), requires installation, occupies a large storage space, has a difficulty in remote management, and so on. In this case, after the data card is inserted into a local portable computer, a user may open a Web browser on the local portable computer, and access a website corresponding to a Web application Web App of the data card to see a Web App interface and perform operations on the interface, such as dial-up access, receiving and sending short messages, and configuring device related parameters.
Document US 2008/301266 A1 discloses a network configuration system and process for automatically configuring a wireless network. The system communicates with a wireless system and a remote system through a network. Once authenticated by authentication module 202, identification module 204 may identify and extract hardware and software information associated with the wireless system 102. Hardware information associated with the wireless system 102 include modem, router, speed of transmission and/or other information for configuring a wireless network.
Document CN 102 098 808 A discloses a data card and a method for Internet access of the data card. It further discloses that after receiving a USB command, the data card reports a device descriptor that is compliant with a requirement of a device specification of the Ethernet interface protocol to the host, where the device descriptor is used to trigger the host to run an Ethernet interface driver.
Document CN 102 158 350 A discloses a method for managing a mobile broadband device. It discloses the receiving, by the Web interface module via the Web protocol stack module, of a management command that is sent by a user on a Web management page of a host device, where the Web management page is provided by the Web interface module; the sending, by the Web interface module via the Web protocol stack module, of the management command to the Web service implementing module; and the receiving, by the Web service implementing module, of the management command, and the invoking of an application programming interface that corresponds to the management command to execute the management command.
However, the Web mode is a local Web mode and still has the following problems:
(1)There are many customized versions of terminal software. The existing customized versions of the terminal software are about 4000 versions per year, but most of such customization focuses on the Web App of the Web interface. Because the Web App runs on the firmware of the data card, the Web App needs to be burnt into the data card during production. Therefore, the software customization and hardware production are closely coupled. Each customized version needs to be produced separately, causing high complexity of managing the customized software version and customized terminal.
(2) High-efficiency of Web version releasing cannot be fully used. An Internet software product developed based on the Web generally has a capability of releasing a version quickly, because it can be directly released on a website as long as an internal test is passed, and the releasing is generally completed within several seconds. Although the local Web mode has used the Web in a programming technology, the Web App software must be delivered with the data card because it is embedded in the data card; in addition, due to factors such as operator promotion, inventory, and sales cycle, usually a version can reach an end user after 2-3 months.

### SUMMARY

Objectives of embodiments of the present invention are to provide methods and devices for managing a mobile broadband device according to the attached independent claims, so as to solve the problems that management of software version customization and device terminal customization is too complicated and that high efficiency of Web version releasing cannot be fully reflected because there are many customized versions of the Web application software and close coupling with hardware production of the mobile broadband device is required when the local Web mode is used in the prior art to manage the mobile broadband device.

One objective of an embodiment of the present invention is to provide a method for managing a mobile broadband device, implemented by the mobile broadband device, where the method includes:
sending a local device identifier to a server, wherein the local device identifier comprises an IP address, a device model, software and hardware version numbers, an international mobile equipment identity, and an international mobile subscriber identity;
updating a customized parameter of the mobile broadband device according to a customized parameter returned by the server, wherein the customized parameter is a parameter preset in the server and corresponding to the local device identifier of the mobile broadband device;
sending a request for opening a Web management page to the server;
receiving a management command sent by a host-side device on the Web management page sent by the server; and
executing the management command through an application programming interface corresponding to the management command on the mobile broadband device.

Another objective of an embodiment of the present invention is to provide a mobile broadband device, where the mobile broadband device includes:
a device identifier sending unit, configured to send a local device identifier to a server, wherein the local device identifier comprises an IP address, a device model, software and hardware version numbers, an international mobile equipment identity, and an international mobile subscriber identity;
a parameter updating unit, configured to update a customized parameter of the mobile broadband device according to a customized parameter returned by the server, wherein the customized parameter is a parameter preset in the server and corresponding to the local device identifier of the mobile broadband device;
a page request sending unit, configured to send a request for opening a Web management page to the server;
a management command receiving unit, configured to receive a management command sent by a host-side device on the Web management page sent by the server; and
a command executing unit, configured to execute the management command through an application programming interface corresponding to the management command on the mobile broadband device.

Another objective of an embodiment of the present invention is to provide a server working method, where the method includes the following steps:
receiving a local device identifier sent by a mobile broadband device, wherein the local device identifier comprises an IP address, a device model, software and hardware version numbers, an international mobile equipment identity, and an international mobile subscriber identity;
when determining, according to the local device identifier, that it is necessary to send a customized parameter to the mobile broadband device, returning the customized parameter to the mobile broadband device, wherein the customized parameter is a parameter preset in the server and corresponding to the local device identifier of the mobile broadband device;
returning, according to a request sent by the mobile broadband device for opening a Web management page, the Web management page to the mobile broadband device; and
receiving management data that is sent by a host-side device and forwarded by the mobile broadband device.

Another objective of an embodiment of the present invention is to provide a server, where the server includes:
a device identifier receiving unit, configured to receive a local device identifier sent by a mobile broadband device, wherein the local device identifier comprises an IP address, a device model, software and hardware version numbers, an international mobile equipment identity, and an international mobile subscriber identity;
a parameter sending unit, configured to: when determining, according to the local device identifier, that it is necessary to send a customized parameter to the mobile broadband device, return the customized parameter to the mobile broadband device, wherein the customized parameter is a parameter preset in the server and corresponding to the local device identifier of the mobile broadband device;
a management page sending unit, configured to return, according to a request sent by the mobile broadband device for opening a Web management page, the Web management page to the mobile broadband device; and
a management data receiving unit, configured to receive management data that is sent by a host-side device and forwarded by the mobile broadband device.

In the embodiments of the present invention, after a mobile broadband device is connected to a mobile terminal, the mobile broadband device sends a local device identifier to a server; updates a customized parameter of the mobile broadband device according to a customized parameter returned by the server; sends a request for opening a Web management page to the server, so that the server returns the Web management page; receives a management command sent by a host-side device on the Web management page; and executes the management command through an application programming interface corresponding to the management command on the mobile broadband device. This solves the problems that management of software version customization and device terminal customization is too complicated and that high efficiency of Web version releasing cannot be fully reflected because there are many customized versions of the Web application software and close coupling with hardware production of the mobile broadband device is required when the local Web mode is used in the prior art to manage the mobile broadband device. Therefore, decoupling between hardware production of the mobile broadband device and customization of Web application software is implemented; the complexity of managing the software version customization and device terminal customization is reduced; the high efficiency of Web version releasing is improved; and the mobile broadband device has a capability of allowing the server to remotely invoke an application programming interface to execute a corresponding management command.

### BRIEF DESCRIPTION OF DRAWINGS

FIG. 1 is a diagram showing an application scenario of a method for managing a mobile broadband device according to a first embodiment of the present invention;
FIG. 2 is an implementation flowchart of a method for managing a mobile broadband device according to the first embodiment of the present invention;
FIG. 3 is a structural diagram of a mobile broadband device according to a second embodiment of the present invention;
FIG. 4 is an implementation flowchart of a server working method according to a third embodiment of the present invention;
FIG. 5 is a structural diagram of a server according to a fourth embodiment of the present invention;
FIG. 6 is a structural diagram of a server according to the fourth embodiment of the present invention; and
FIG. 7 is a structural diagram of a system for managing a mobile broadband device according to a fifth embodiment of the present invention.

### DESCRIPTION OF EMBODIMENTS

To make the objectives, technical solutions, and advantages of the present invention more comprehensible, the following further describes the present invention in detail with reference to the accompanying drawings and embodiments. It is understandable that the specific embodiments are merely used to explain the present invention and are not intended to limit the present invention.

In the embodiments of the present invention, a local device identifier of a mobile broadband device is sent to a server; a customized parameter of the mobile broadband device is updated according to a customized parameter returned by the server; and according to a management command sent by a user on a management page provided by the server, the management command is executed through an application programming interface corresponding to the command. Therefore, decoupling between the mobile broadband device and the Web APP is implemented; the complexity of managing the software version customization and device terminal customization is reduced; the high efficiency of Web version releasing is improved; and the mobile broadband device has a capability of allowing the server to remotely invoke an application programming interface to execute a corresponding management command.

An embodiment of the present invention provides a method for managing a mobile broadband device, where the method includes the following steps:
sending a local device identifier to a server;
updating a customized parameter of the mobile broadband device according to a customized parameter returned by the server;
sending a request for opening a Web management page to the server, so that the server returns the Web management page;
receiving a management command sent by a host-side device on the Web management page; and
executing the management command through an application programming interface corresponding to the management command on the mobile broadband device.

An embodiment of the present invention further provides a mobile broadband device, where the mobile broadband device includes:
a device identifier sending unit, configured to send a local device identifier to a server;
a parameter updating unit, configured to update a customized parameter of the mobile broadband device according to a customized parameter returned by the server;
a page request sending unit, configured to send a request for opening a Web management page to the server, so that the server returns the Web management page;
a management command receiving unit, configured to receive a management command sent by a host-side device on the Web management page; and
a command executing unit, configured to execute the management command through an application programming interface corresponding to the management command on the mobile broadband device.

An embodiment of the present invention further provides a server working method, where the method includes the following steps:
receiving a local device identifier sent by a mobile broadband device;
when determining, according to the local device identifier, that it is necessary to send a customized parameter to the mobile broadband device, returning the customized parameter to the mobile broadband device;
returning, according to a request sent by the mobile broadband device for opening a Web management page, the Web management page to the mobile broadband device; and
receiving management data that is sent by a host-side device and forwarded by the mobile broadband device, so that the host-side device displays the management data.

An embodiment of the present invention further provides a server, where the server includes:
a device identifier receiving unit, configured to receive a local device identifier sent by a mobile broadband device;
a parameter sending unit, configured to: when determining, according to the local device identifier, that it is necessary to send a customized parameter to the mobile broadband device, return the customized parameter to the mobile broadband device;
a management page sending unit, configured to return, according to a request sent by the mobile broadband device for opening a Web management page, the Web management page to the mobile broadband device; and
a management data receiving unit, configured to receive management data that is sent by a host-side device and forwarded by the mobile broadband device, so that the host-side device displays the management data.

An embodiment of the present invention further provides a system for managing a mobile broadband device, where the system includes a mobile broadband device and a server, where:
the mobile broadband device is configured to: send a local device identifier to the server; update a customized parameter of the mobile broadband device according to a customized parameter returned by the server; send a request for opening a Web management page to the server, so that the server returns the Web management page; receive a management command sent by a host-side device on the Web management page; and execute the management command through an application programming interface corresponding to the management command on the mobile broadband device; and
the server is configured to: when determining, according to the local device identifier, that it is necessary to send a customized parameter to the mobile broadband device, return the customized parameter to the mobile broadband device; and receive management data that is sent by the host-side device and forwarded by the mobile broadband device, so that the host-side device displays the management data.

In the embodiments of the present invention, a local device identifier is sent to a server; a customized parameter of the mobile broadband device is updated according to a customized parameter returned by the server; a request for opening a Web management page is sent to the server, so that the server returns the Web management page; a management command sent by a host-side device on the Web management page is received; an application programming interface corresponding to the management command on the mobile broadband device is invoked to execute the management command. Therefore, decoupling between hardware production of the mobile broadband device and customization of the Web application software is implemented; the complexity of managing the software version customization and device terminal customization is reduced; the high efficiency of Web version releasing is improved; and the mobile broadband device has a capability of allowing the server to remotely invoke an application programming interface.

The following describes the specific implementation of the present invention in detail with reference to specific embodiments.

### Embodiment 1

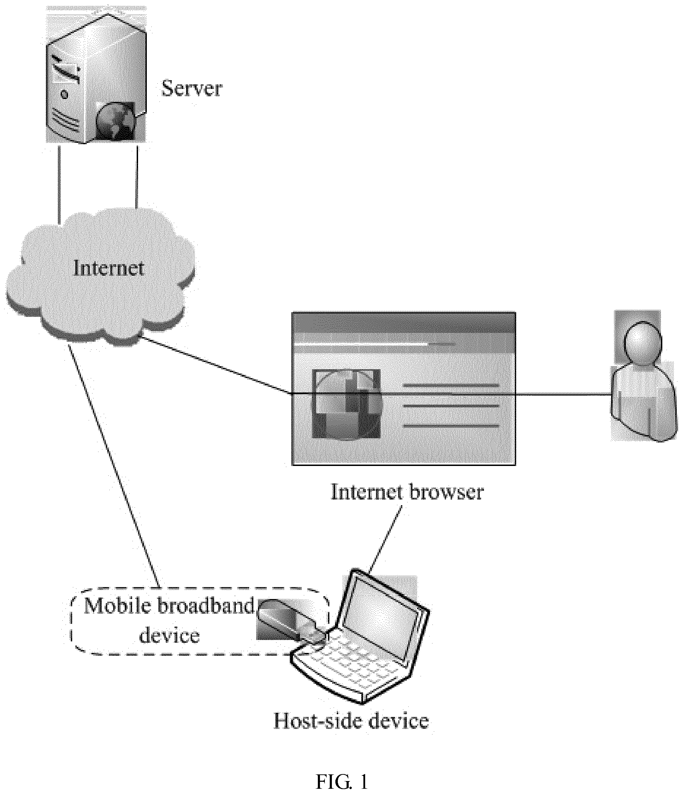

FIG. 1 shows an application scenario of a method for managing a mobile broadband device according to a first embodiment of the present invention.

Generally, the mobile broadband device has a USB interface. After the mobile broadband device is connected to the host-side device through the USB interface, the mobile broadband device may be virtually mapped to different devices through the corresponding drivers. For example, a conventional PC client usually uses a serial port to receive and send AT commands to exchange management data with a mobile broadband device, and therefore, the device type of the conventional mobile broadband device displayed on the host-side device is "serial port"; when the conventional PC client uses a modem port to exchange service data with the mobile broadband device, the device type of the conventional mobile broadband device displayed on the host-side device may also be a "modem device". In the embodiment of the present invention, the mobile broadband device exchanges management data and service data with the host-side device through mapped network ports, while the mobile broadband device and the host-side device may exchange data with the server through the Internet or Intranet.

As shown in FIG. 1, the host-side device of the mobile broadband device in the embodiment of the present invention can manage the mobile broadband device without a client, so that the mobile broadband device has merits of free installation, easy development, and low cost; with only a common Internet browser, for example, IE and Firefox, a user can manage the mobile broadband device by using the Internet browser or remote Web mode. Therefore, the mobile broadband device according to the embodiment of the present invention may be applied to any host-side device having an Internet browser, including a PC and various embedded devices.

In the embodiment of the present invention, the data from the host-side device includes management data and service data, where the management data usually relates to an operation performed on the mobile broadband device itself, while the service data usually relates to operations based on Internet applications. For example, for operations related to the state query of the mobile broadband device (including traffic and signal strength) and updating of customized parameters of the device (a device management parameter, a short message service, a phone book service, and so on), the data corresponding to the operations is management data; for operations such as Internet access and QQ chatting, the data corresponding to the operations is service data. The management data and service data are transferred from the host-side device to the mobile broadband device through the server and the network port to which the mobile broadband device is mapped.

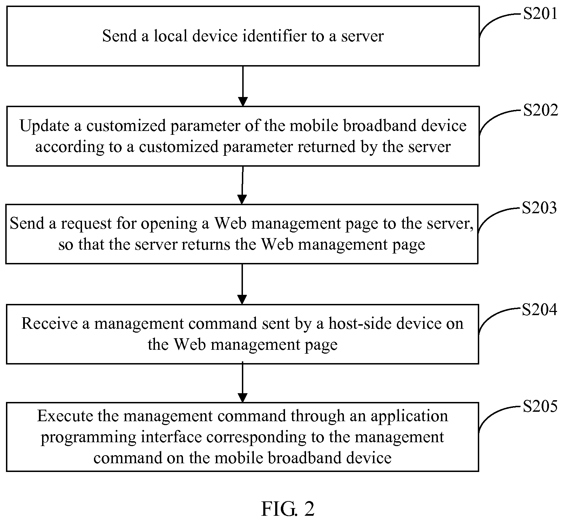

FIG. 2 is an implementation flowchart of a method for managing a mobile broadband device according to the first embodiment of the present invention, which is described in detail below:
In step S201, a local device identifier is sent to a server.

The local device identifier is used to uniquely identify the mobile broadband device. It includes an IP address, a device model, software and hardware version numbers, an international mobile equipment identity, and an international mobile subscriber identity, and other device identifiers, and is an integrated identifier, where the IP address is an IP address allocated by a network side after the mobile broadband device is connected to a mobile terminal. Specifically, after a user performs dial-up access, the mobile broadband device may actively upload a local device identifier to the server, where the local device identifier includes an IP address allocated by the network side to facilitate invoking of the application programming interface of the corresponding mobile broadband device by the server subsequently, so that the mobile broadband device implements processing of an application function through the application programming interface corresponding to the application function.

In step S202, a customized parameter of the mobile broadband device is updated according to a customized parameter returned by the server.

The customized parameter is a parameter preset in the server and corresponding to the local device identifier of the mobile broadband device. It includes a device management parameter, a service parameter, and so on, and may be a device parameter, a dial-up access parameter, a short message service enabling parameter, and so on, which are preset by a device manufacturer and used to configure the mobile broadband device of the model. Specifically, if the mobile broadband device has a default parameter that is a short message service disabling parameter, after the mobile broadband device is connected to the mobile terminal, when the user performs dial-up access, the mobile broadband device sends a local device identifier to the server; the server finds, according to the local device identifier, a customized parameter of the device of the model which is stored in a database, and thereby judges, according to a flag indicating whether to send the customized parameter, in the customized parameter, whether it is necessary to send the customized parameter to the mobile broadband device, and if so, sends the customized parameter to the mobile broadband device, or otherwise, does not send the customized parameter. In this way, the device enables the short message service according to the short message service enabling parameter in the received customized parameter.

In the embodiment of the present invention, when a remote Web mode is used to manage the mobile broadband device, the user can directly access the server after accessing the Internet by using the mobile broadband device, and update the mobile broadband device according to the pre-customized and released version or customized parameter of the mobile broadband device in the server. Therefore, when hardware of the mobile broadband device is delivered, customization of the software interface is not required, the version is directly released on a website of the server, and the customized parameter of the mobile broadband device can be updated according to the version on the website of the server. Therefore, the complexity of managing the software version customization and device terminal customization is reduced; the high efficiency of Web version releasing is improved; and upgrade of the mobile broadband device and its Web interface is more convenient.

In step 203, a request for opening a Web management page is sent to the server, so that the server returns the Web management page.

Specifically, the server provides an interface for service implementation, namely, a Web management page for the user to manage the mobile broadband device in a Web mode on the host-side device. Specifically, according to the received request for opening a Web management page, the server returns the Web management page, where the Web management page may include some common HTML (Hyper Text Markup Language, HTML) Web pages, which may include JavaScript (JAVA script language) and CSS (Cascading Style Sheets) scripts, all of which are standard HTML page elements. The Web API may be a conventional SOAP (Simple Object Access Protocol) interface, or may also be a lightweight RESTful (REpresentation State Transfer, application or design meeting architecture constraints and principles) interface; these interfaces may be invoked directly without any modification.

In step 204, a management command sent by a host-side device on the Web management page is received.

In step 205, the management command is executed through an application programming interface corresponding to the management command on the mobile broadband device.

In the embodiment of the present invention, all the management commands sent by the user through the Web management page of the browser relate to operations performed on the mobile broadband device itself, and therefore, the management commands are management data, while the data sent by the user through other Web pages of the browser or other Internet-based application software is service data. The mobile broadband device receives the management command sent on the Web management page provided by the server, accesses the corresponding mobile broadband device according to the IP address in the local device identifier, and thereby executes the command through the application programming interface corresponding to the management command in the device. This solves the technical problem of accessing the local device by a "remote Web application", that is, the mobile broadband device has a capability of allowing the server to remotely invoke a Web API.

The method for managing a mobile broadband device further includes the following step:
sending an execution result of the management command to the server, so that the server updates content of the Web management page based on the execution result and that the host-side device displays the updated Web management page.

In addition, the method for managing a mobile broadband device further includes the following steps:
identifying whether data sent by the host-side device is management data or service data; and
after the data is determined as management data, sending the management data to the server, so that the host-side device displays the management data; or
after the data is determined as service data, processing the service data through a radio network.

In the specific implementation process, where the short message service is used as an example, interfaces for managing a short message mailbox, editing a new short message, and so on are implemented on the Web management page provided by the server, while the mobile broadband device needs to implement bottom-layer receiving and bottom-layer sending of the short message and encoding and decoding of the message. Specifically, when the user wants to send a short message, the user can send a request for opening a short message sending page to the server by clicking the short message sending function module on the Web management page of the host-side device, and edit a short message on the short message sending page returned by the server according to the request. After the short message is edited and sent, the server receives the short message sending request. The server invokes the Web API of the corresponding mobile broadband device according to the IP address in the local device identifier, so as to execute the short message sending request. The mobile broadband device identifies that the data included in the short message sending request sent by the host-side device is service data, and therefore the mobile broadband device sends the short message through the preset API, executes the short message sending function, and outputs the processing result of short message sending success or identification or execution result to the server; therefore, the host-side device displays information about completion of sending the short message to the user.

The method for managing a mobile broadband device according to the embodiment of the present invention manages the mobile broadband device by using an Internet browser in a Web mode, so that the host-side device using the mobile broadband device does not require a client any longer. In this way, the problem of cross-platform support of the client can be solved completely. The method in the embodiment of the present invention does not require a client to be installed on the host-side device. Therefore, complex development and storage for clients of multiple operating systems can be avoided, and the problem that the OS needs to be restarted after client installation is solved. Therefore, the development difficulty can be reduced, the user experience is improved, the requirement on the storage space of the mobile broadband device is reduced, and the cost of the mobile broadband device is reduced.

In the embodiment of the present invention, because the mobile broadband device does not include the Web APP that provides a Web management page, but the server includes a Web APP, that is, the server provides a Web management page of the host-side device, when a user uses the mobile broadband device for Internet access, the user can directly access the Web APP website on the server without accessing the Web APP website in the conventional mobile broadband device, and thereby can implement device parameter configuration, service management, and so on for the mobile broadband device. This solves the problems that management of interface application customization of the software version and device terminal customization is too complicated and that high efficiency of Web version releasing cannot be fully reflected because there are many customized versions of the Web application software and close coupling with hardware production of the mobile broadband device is required when the local Web mode is used in the prior art to manage the mobile broadband device and the mobile broadband device provides the Web APP of the Web management page. Decoupling between hardware production of the mobile broadband device and releasing of Web APP software is implemented. Therefore, when hardware of the mobile broadband device is delivered, customization of the software interface is not required and the version is directly released on a website. Therefore, the complexity of managing the software version customization and device terminal customization is reduced; the high efficiency of Web version releasing is improved; and upgrade of the software interface is more convenient; in addition, the method for managing a mobile broadband device can remotely invoke an application programming interface to execute the corresponding management command and improve user experience.

### Embodiment 2

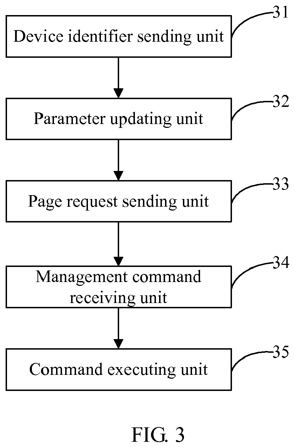

FIG. 3 shows a structure of a mobile broadband device according to a second embodiment of the present invention, and for ease of description, only shows the part related to the embodiment of the present invention. The mobile broadband device includes a device identifier sending unit 31, a parameter updating unit 32, a page request sending unit 33, a management command receiving unit 34, and a command executing unit 35.

The device identifier sending unit 31 is configured to send a local device identifier to a server.

The local device identifier is used to uniquely identify the mobile broadband device. It includes an IP address, a device model, software and hardware version numbers, an international mobile equipment identity, and an international mobile subscriber identity, and other device identifiers, and is an integrated identifier, where the IP address is an IP address allocated by a network side after the mobile broadband device is connected to a mobile terminal. Specifically, after a user performs dial-up access, the mobile broadband device may actively upload a local device identifier to the server, where the local device identifier includes an IP address allocated by the network side to facilitate invoking of the application programming interface of the corresponding mobile broadband device by the server subsequently, so that the mobile broadband device implements processing of an application function through the application programming interface corresponding to the application function.

The parameter updating unit 32 is configured to update a customized parameter of the mobile broadband device according to a customized parameter returned by the server.

The customized parameter is a parameter preset in the server and corresponding to the local device identifier of the mobile broadband device. It includes a device management parameter, a service parameter, and so on, and may be a device parameter, a dial-up access parameter, a short message service enabling parameter, and so on, which are preset by a device manufacturer and used to configure the mobile broadband device of the model.

Specifically, if the mobile broadband device has a default parameter that is a short message service disabling parameter, after the mobile broadband device is connected to the mobile terminal, when the user performs dial-up access, the device identifier sending unit 31 sends a local device identifier to the server; the server finds, according to the device model in the local device identifier, a customized parameter of the device of the model which is stored in a database, and thereby judges, according to a flag indicating whether to send the customized parameter, in the customized parameter, whether it is necessary to send the customized parameter to the mobile broadband device, and if so, sends the customized parameter to the mobile broadband device, or otherwise, does not send the customized parameter. In this way, the parameter updating unit 32 enables the short message service in the mobile broadband device according to the short message service enabling parameter in the customized parameter.

In the embodiment of the present invention, when a remote Web mode is used to manage the mobile broadband device, the user can directly access the server after accessing the Internet by using the mobile broadband device, and update the mobile broadband device according to the pre-customized and released version or customized parameter of the mobile broadband device in the server. Therefore, when hardware of the mobile broadband device is delivered, customization of the software interface is not required and the version is directly released on a website of the server. Therefore, the complexity of managing the software version customization and device terminal customization is reduced; the high efficiency of Web version releasing is improved; and upgrade of the mobile broadband device and its Web interface is more convenient.

The page request sending unit 33 is configured to send a request for opening a Web management page to the server, so that the server returns the Web management page.

The management command receiving unit 34 is configured to receive a management command sent by a host-side device on the Web management page.

The command executing unit 35 is configured to execute the management command through an application programming interface corresponding to the management command on the mobile broadband device.

The Web API may be a conventional SOAP (Simple Object Access Protocol, Simple Object Access Protocol) interface, or may also be a lightweight RESTful (REpresentation State Transfer, application or design meeting architecture constraints and principles) interface; these interfaces may be invoked directly without any modification.

In the embodiment of the present invention, the page request sending unit 33 of the mobile broadband device sends a request for opening a Web management page to the server, so that the server returns the Web management page; the management command receiving unit 34 receives a management command sent on the Web management page, obtains the corresponding mobile broadband device according to the IP address in the local device identifier, and thereby executes the management command through an application programming interface that is located in the command executing unit 35 and corresponds to the management command on the mobile broadband device. This solves the technical problem of accessing the local device by a "remote Web application".

The mobile broadband device further includes:
a data type identifying unit, configured to identify whether data sent by the host-side device is management data or service data;
a management data processing unit, configured to: after the data is determined as management data, send the management data to the server, so that the host-side device displays the management data;
a service data processing unit, configured to: after the data is determined as service data, process the service data through a radio network; and
an execution result sending unit, configured to send an execution result of the management command to the server, so that the server updates content of the Web management page based on the execution result and that the host-side device displays the updated Web management page.

All the management commands sent by the user through the Web management page of the browser relate to operations performed on the mobile broadband device itself, and therefore, the management commands are management data, while the data sent by the user through other Web pages of the browser or other Internet-based application software is service data.

In the embodiment of the present invention, when the user completes editing of a short message on the Web management page of the host-side page and sends the message, the server receives the short message sending request, and invokes the Web API of the corresponding mobile broadband device according to the IP address in the local device identifier; the data type identifying unit identifies that the data sent by the host-side device is service data. Therefore, the service data processing unit processes the short message sending request through the preset Web API and executes the short message sending function; the execution result sending unit outputs the processing result of short message sending success or identification to the server; therefore, the host-side device displays information about completion of sending the short message to the user. The mobile terminal device may be an embedded device supporting the Web API, for example, a router and a set top box.

In addition, because the mobile broadband device does not include the interface Web APP that provides a Web management page, but the server includes a Web APP, that is, the server provides a Web management page of the host-side device, when a user uses the mobile broadband device for Internet access, the user can directly access the Web APP website on the server without accessing the Web APP website in the conventional mobile broadband device, and thereby can implement device parameter configuration, service management, and so on for the mobile broadband device.

In the embodiment of the present invention, the device identifier sending unit 31 sends a local device identifier to a server; the parameter updating unit 32 updates a customized parameter of the mobile broadband device according to a customized parameter returned by the server; the page request sending unit 33 sends a request for opening a Web management page to the server, so that the server returns the Web management page; the management command receiving unit 34 receives a management command sent by a host-side device on the Web management page; and the command executing unit 35 executes the management command through an application programming interface corresponding to the management command on the mobile broadband device. Therefore, when hardware of the mobile broadband device is delivered, customization of the software interface is not required and the version is directly released on a website. Therefore, the objectives of receiving the management command sent by the user and executing the management command through the application programming interface corresponding to the management command are achieved; the complexity of managing the software version customization and device terminal customization is reduced; and the high efficiency of Web version releasing is improved.

### Embodiment 3

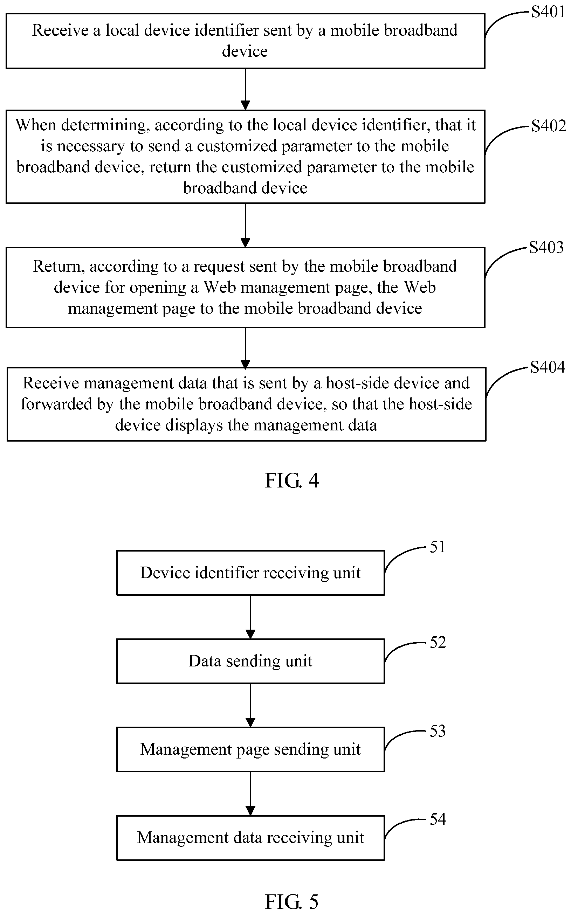

FIG. 4 is an implementation flowchart of a server working method according to a third embodiment of the present invention, which is described in detail below:

In step S401, a local device identifier sent by a mobile broadband device is received.

The local device identifier is used to uniquely identify the mobile broadband device. It includes an IP address, a device model, software and hardware version numbers, an international mobile equipment identity, and an international mobile subscriber identity, and other device identifiers, and is an integrated identifier, where the IP address is an IP address allocated by a network side after the mobile broadband device is connected to a mobile terminal. Specifically, after a user performs dial-up access, the mobile broadband device may actively upload the local device identifier to the server, and the server receives the local device identifier sent by the mobile broadband device.

In step S402, when the necessity of sending a customized parameter to the mobile broadband device is determined according to the local device identifier, the customized parameter is returned to the mobile broadband device.

The customized parameter is a parameter preset in the server and corresponding to the local device identifier of the mobile broadband device. It includes a device management parameter, a service parameter, and so on, and may be a device parameter, a dial-up access parameter, a short message service enabling parameter, and so on, which are preset by a device manufacturer and used to configure the mobile broadband device of the model. Specifically, after receiving the local device identifier, the server finds, according to the device model in the device identifier, a customized parameter of the device of the model which is stored in a database, and thereby judges, according to a flag indicating whether to send the customized parameter, in the customized parameter, whether it is necessary to send the customized parameter to the mobile broadband device. If the customized parameter includes a flag indicating that it is necessary to send the customized parameter, the server sends the customized parameter to the mobile broadband device and writes the customized parameter to the mobile broadband device, or otherwise, does not send the customized parameter.

In step S403, according to a request sent by the mobile broadband device for opening a Web management page, the Web management page is sent to the host-side device.

In step S404, management data that is sent by a host-side device and forwarded by the mobile broadband device is received, so that the host-side device displays the management data.

Specifically, after a user accesses the Internet, the host side directly accesses the Web APP application website on the server, and then sends a request for opening a Web management page to the server. First the mobile broadband device receives the request, and after determining that the request is management data, forwards the management data to the server, so that the server, after receiving the request for opening the Web management page, returns the Web management page and displays the page to the user. Therefore, the user can perform operations such as managing the mobile broadband device on the Web management page of the Web APP. In addition, because the server is independent of the mobile broadband device, the Web management page can be updated any time.

The server working method further includes the following steps:
receiving a management command that is sent by the host-side device on the Web management page and forwarded by the mobile broadband device;
invoking an application programming interface of the mobile broadband device corresponding to the IP address in the local device identifier, so that the mobile broadband device executes the management command through an application programming interface corresponding to the management command;
receiving an execution result of the management command sent by the mobile broadband device; and
updating content of the Web management page based on the execution result, so that the host-side device displays the updated Web management page.

In the specific implementation process, a data card is used as an example, but the mobile broadband device is not limited thereto; the Web App in the server may provide program components that can directly run remotely. The components are usually applicable to services that invoke the Web App of the data card infrequently, especially some services combined with a third-party cloud-end application, for example, Google phone book and BaiduMap, but the Web App may also provide program components that are used for synchronizing the Web App of the local data card, which are mainly applicable to services that are closely related to the data card and invoke the Web App frequently, for example, sending of a short message. In the actual product development process, for a service that is closely related to the data card and invokes the Web API frequently, the Web App of the server may first download the service-related program components or customized parameters to the data card including a local Web App, and therefore, in the subsequent frequent service processing, the Web API in the local Web App of the data card is directly used to process the service without frequently invoking the Web API through the server to process the service, that is, the data card including the Web App and the conventional local Web mode are used to process the service. Although the method cannot solve the problem of decoupling between the mobile broadband device and the Web APP which is mentioned in the embodiment of the present invention, the method can still improve efficiency of version customization and releasing, and can also improve the service processing speed, so that the user obtains good experience and that product development is easier.

In the embodiment of the present invention, the server can receive the local device identifier sent by the mobile broadband device, and send the customized parameter to the mobile broadband device according to the preset customized parameter and local device identifier, so that the server is independent of the mobile broadband device and that the version can be customized and released on the server. Therefore, the efficiency of version customization and releasing is improved greatly. In addition, the server can provide a Web management page, and invoke, according to the received management command sent by the mobile terminal, the Web API of the mobile broadband device corresponding to the IP address in the local device identifier to process the request; therefore, the objective of remotely accessing the mobile broadband device by using the IP address of the local device identifier is achieved.

Persons of ordinary skill in the art may understand that all or a part of the steps in the foregoing method embodiments may be completed by hardware following instructions of a program. The program may be stored in a computer readable storage medium such as a ROM/RAM, a magnetic disk, or an optical disk.

### Embodiment 4

FIG. 5 shows a structure of a server according to a fourth embodiment of the present invention, and for ease of description, only shows the part related to the embodiment of the present invention. The server includes a device identifier receiving unit 51, a parameter sending unit 52, a management page sending unit 53, and a management data receiving unit 54.

The device identifier receiving unit 51 is configured to receive a local device identifier sent by a mobile broadband device.

The local device identifier is used to uniquely identify the mobile broadband device. It includes an IP address, a device model, software and hardware version numbers, an international mobile equipment identity, and an international mobile subscriber identity, and other device identifiers, and is an integrated identifier, where the IP address is an IP address allocated by a network side after the mobile broadband device is connected to a mobile terminal.

The parameter sending unit 52 is configured to: when determining, according to the local device identifier, that it is necessary to send a customized parameter to the mobile broadband device, return the customized parameter to the mobile broadband device.

The customized parameter is a parameter preset in the server and corresponding to the local device identifier of the mobile broadband device. It includes a device management parameter, a service parameter, and so on, and may be a device parameter, a dial-up access parameter, a short message service enabling parameter, and so on, which are preset by a device manufacturer and used to configure the mobile broadband device of the model.

Specifically, after receiving the local device identifier, the server finds, according to the device model in the device identifier, a customized parameter of the device of the model which is stored in a database, and thereby judges, according to a flag indicating whether to send the customized parameter, in the customized parameter, whether it is necessary to send the customized parameter to the mobile broadband device. If the customized parameter includes a flag indicating that it is necessary to send the customized parameter, the server sends the customized parameter to the mobile broadband device and writes the customized parameter to the mobile broadband device, or otherwise, does not send the customized parameter.

In the embodiment of the present invention, the device identifier receiving unit 51 of the server receives the local device identifier sent by the mobile broadband device; the parameter sending unit 52, when determining, according to the local device identifier, that it is necessary to send a customized parameter to the mobile broadband device, returns the customized parameter to the mobile broadband device, so that the server is independent of the mobile broadband device and that the version can be customized and released on the server. Therefore, the efficiency of version customization and releasing is improved greatly.

The management page sending unit 53 is configured to return, according to a request sent by the mobile broadband device for opening a Web management page, the Web management page to the mobile broadband device.

The management data receiving unit 54 is configured to receive management data that is sent by a host-side device and forwarded by the mobile broadband device, so that the host-side device displays the Web management page.

In the embodiment of the present invention, after a user accesses the Internet, the host side directly accesses the Web APP application website on the server, and then sends a request for obtaining a Web management page to the server. First the mobile broadband device receives the request, and after determining that the request is management data, forwards the management data to the server, so that the server, after receiving the request for obtaining the Web management page, returns the page corresponding to the request for obtaining the Web management page and displays the page to the user. Therefore, the user can perform operations such as managing the mobile broadband device on the Web management page of the Web APP. In addition, because the server is independent of the mobile broadband device, the Web page interface can be updated any time.

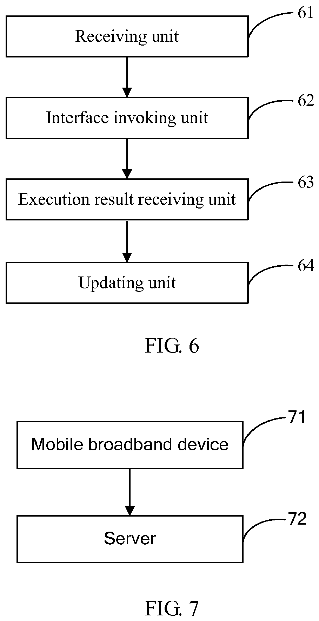

As shown in FIG. 6, the server further includes:
a receiving unit 61, configured to receive a management command that is sent by the user on the Web management page of the host-side device and forwarded by the mobile broadband device;
an interface invoking unit 62, configured to invoke an application programming interface of the mobile broadband device corresponding to an IP address in the local device identifier, so that the mobile broadband device executes the management command through an application programming interface corresponding to the management command;
an execution result receiving unit 63, configured to receive an execution result of the management command, which is sent by the mobile broadband device; and
an updating unit 64, configured to update content of the Web management page based on the execution result, so that the host-side device displays the updated Web management page.

Specifically, when the receiving unit 61 receives a device parameter configuration or service processing request sent by the mobile terminal, the interface invoking unit 62 can remotely invoke, according to the IP address in the local device identifier, a Web API of the mobile broadband device corresponding to the IP address, and process the request through the corresponding service processing function in the mobile broadband device; the updating unit 64 sends a result of processing the request by the mobile broadband device to the mobile terminal, so that the result is displayed to the user.

In the embodiment of the present invention, the receiving unit 61 receives a management command that is sent by the user on the Web management page of the host-side device and forwarded by the mobile broadband device; the interface invoking unit 62 invokes an application programming interface of the mobile broadband device corresponding to an IP address in the local device identifier, so that the mobile broadband device executes the management command through an application programming interface corresponding to the management command; the execution result receiving unit 63 further receives an execution result of the management command, which is sent by the mobile broadband device; and the updating unit 64 updates content of the Web management page based on the execution result, so that the host-side device displays the updated Web management page. Objectives of remotely accessing the mobile broadband device by using the IP address of the local device identifier and managing the mobile broadband device are achieved.

### Embodiment 5

FIG. 7 shows a structure of a system for managing a mobile broadband device according to a fifth embodiment of the present invention, and for ease of description, only shows the part related to the embodiment of the present invention. The system for managing a mobile management device includes a mobile broadband device 71 and a server 72.

The mobile broadband device 71 is configured to: send a local device identifier to the server 72; update a customized parameter of the mobile broadband device 71 according to a customized parameter returned by the server 72; send a request for opening a Web management page to the server 72, so that the server 72 returns the Web management page; receive a management command sent by a host-side device on the Web management page; and execute the management command through an application programming interface corresponding to the management command on the mobile broadband device 71.

The local device identifier is used to uniquely identify the mobile broadband device. It includes an IP address, a device model, software and hardware version numbers, an international mobile equipment identity, and an international mobile subscriber identity, and other device identifiers, and is an integrated identifier, where the IP address is an IP address allocated by a network side after the mobile broadband device is connected to a mobile terminal. The customized parameter is a parameter preset in the server and corresponding to the local device identifier of the mobile broadband device. It includes a device management parameter, a service parameter, and so on, and may be a device parameter, a dial-up access parameter, a short message service enabling parameter, and so on, which are preset by a device manufacturer and used to configure the mobile broadband device of the model.

The mobile broadband device 71 further includes:
a data type identifying unit, configured to identify whether data sent by the host-side device is management data or service data;
a management data processing unit, configured to: after the data is determined as management data, send the management data to the server, so that the host-side device displays the Web management page;
a service data processing unit, configured to: after the data is determined as service data, process the service data through a radio network; and
an execution result sending unit, configured to send an execution result of the management command to the server, so that the server updates content of the Web management page based on the execution result and that the host-side device displays the updated Web management page.

The server 72 is configured to: when determining, according to the local device identifier sent by the mobile broadband device 71, that it is necessary to send a customized parameter to the mobile broadband device 71, return the customized parameter to the mobile broadband device 71; and receive management data that is sent by the host-side device and forwarded by the mobile broadband device 71, so that the host-side device displays the management data.

The server 72 further includes:
a receiving unit, configured to receive a management command that is sent by a user on the Web management page of the host-side device and forwarded by the mobile broadband device;
an interface invoking unit, configured to invoke an application programming interface of the mobile broadband device corresponding to an IP address in the local device identifier, so that the mobile broadband device executes the management command through an application programming interface corresponding to the management command;
an execution result receiving unit, configured to receive an execution result of the management command, which is sent by the mobile broadband device; and
an updating unit, configured to update content of the Web management page based on the execution result, so that the host-side device displays the updated Web management page.

Processes of implementing the functions of each unit in the system for managing a mobile broadband device are not further described herein; for details, reference may be made to the implementation processes of the corresponding embodiments above.

In the embodiments of the present invention, after a mobile broadband device is connected to a mobile terminal, the mobile broadband device sends a local device identifier to a server; updates a customized parameter of the mobile broadband device according to a customized parameter returned by the server; sends a request for opening a Web management page to the server, so that the server returns the Web management page; receives a management command sent by a host-side device on the Web management page; and executes the management command through an application programming interface corresponding to the management command on the mobile broadband device. This solves the problems that management of software version customization and device terminal customization is too complicated and that high efficiency of Web version releasing cannot be fully reflected because there are many customized versions of the Web application software and close coupling with hardware production of the mobile broadband device is required when the local Web mode is used in the prior art to manage the mobile broadband device. Therefore, decoupling between the mobile broadband device and the Web APP is implemented; the complexity of managing the software version customization and device terminal customization is reduced; the high efficiency of Web version releasing is improved; and the mobile broadband device has a capability of allowing the server to remotely invoke an application programming interface to execute a corresponding management command.

The foregoing descriptions are merely exemplary embodiments of the present invention, but are not intended to limit the present invention. Any modifications, equivalent replacements, or improvements made within the principle of the present invention shall fall within the protection scope of the present invention.

## Claims

1. A method for managing a mobile broadband device, implemented by the mobile broadband device, comprising:
sending (S201) a local device identifier to a server, wherein the local device identifier comprises an IP address, a device model, software and hardware version numbers, an international mobile equipment identity, and an international mobile subscriber identity;
updating (S202) a customized parameter of the mobile broadband device according to a customized parameter returned by the server, wherein the customized parameter is a parameter preset in the server and corresponding to the local device identifier of the mobile broadband device;
sending (S203) a request for opening a Web management page to the server;
receiving (S204) a management command sent by a host-side device on the Web management page, said Web management page being sent by the server to the host-side device; and
executing (S205) the management command through an application programming interface corresponding to the management command on the mobile broadband device.

2. The method according to claim 1, further comprising:
identifying whether data sent by the host-side device is management data or service data; and
after the data is determined as management data, sending the management data to the server; or
after the data is determined as service data, processing the service data through a radio network.

3. The method according to claim 1, further comprising:
sending an execution result of the management command to the server.

4. A mobile broadband device, comprising:
a device identifier sending unit (31), configured to send a local device identifier to a server, wherein the local device identifier comprises an IP address, a device model, software and hardware version numbers, an international mobile equipment identity, and an international mobile subscriber identity;
a parameter updating unit (32), configured to update a customized parameter of the mobile broadband device according to a customized parameter returned by the server, wherein the customized parameter is a parameter preset in the server and corresponding to the local device identifier of the mobile broadband device;
a page request sending unit (33), configured to send a request for opening a Web management page to the server;
a management command receiving unit (34), configured to receive a management command sent by a host-side device on the Web management page, said Web management page being sent by the server to the host-side device; and
a command executing unit (35), configured to execute the management command through an application programming interface corresponding to the management command on the mobile broadband device.

5. The mobile broadband device according to claim 4, further comprising:
a data type identifying unit, configured to identify whether data sent by the host-side device is management data or service data;
a management data processing unit, configured to: after the data is determined as management data, send the management data to the server; and
a service data processing unit, configured to: after the data is determined as service data, process the service data through a radio network.

6. A server working method, comprising:
receiving a local device identifier sent by a mobile broadband device, wherein the local device identifier comprises an IP address, a device model, software and hardware version numbers, an international mobile equipment identity, and an international mobile subscriber identity;
when determining, according to the local device identifier, that it is necessary to send a customized parameter to the mobile broadband device, returning the customized parameter to the mobile broadband device, wherein the customized parameter is a parameter preset in the server and corresponding to the local device identifier of the mobile broadband device;
returning, according to a request sent by the mobile broadband device for opening a Web management page, the Web management page to a host-side device; and
receiving management data that is sent by the host-side device and forwarded by the mobile broadband device.

7. The method according to claim 6, further comprising:
receiving a management command that is sent by the host-side device on the Web management page and forwarded by the mobile broadband device; and
invoking an application programming interface of the mobile broadband device corresponding to an IP address in the local device identifier.

8. The method according to claim 7, further comprising:
receiving an execution result of the management command sent by the mobile broadband device; and
updating content of the Web management page based on the execution result.

9. A server, comprising:
a device identifier receiving unit (51), configured to receive a local device identifier sent by a mobile broadband device, wherein the local device identifier comprises an IP address, a device model, software and hardware version numbers, an international mobile equipment identity, and an international mobile subscriber identity;
a parameter sending unit (52), configured to: when determining, according to the local device identifier, that it is necessary to send a customized parameter to the mobile broadband device, return the customized parameter to the mobile broadband device, wherein the customized parameter is a parameter preset in the server and corresponding to the local device identifier of the mobile broadband device;
a management page sending unit (53), configured to return, according to a request sent by the mobile broadband device for opening a Web management page, the Web management page to a host-side device; and
a management data receiving unit (54), configured to receive management data that is sent by the host-side device and forwarded by the mobile broadband device.

## Patentansprüche

1. Verfahren zum Verwalten einer mobilen Breitbandvorrichtung, realisiert durch die mobile Breitbandvorrichtung, das umfasst:
Senden (S201) einer lokalen Vorrichtungskennung an einen Server, wobei die lokale Vorrichtungskennung eine IP-Adresse, ein Vorrichtungsmodell, eine Software- und eine Hardwareversionsnummer, eine "International Mobile Equipment Identity" sowie eine "International Mobile Subscriber Identity" umfasst;
Aktualisieren (S202) eines kundenspezifischen Parameters der mobilen Breitbandvorrichtung gemäß einem von dem Server zurückgegebenen kundenspezifischen Parameter, wobei der kundenspezifische Parameter ein Parameter ist, der in dem Server voreingestellt ist und der lokalen Vorrichtungskennung der mobilen Breitbandvorrichtung entspricht;
Senden (S203) einer Anforderung zum Öffnen einer Web-Verwaltungsseite an den Server;
Empfangen (S204) eines von einer hostseitigen Vorrichtung auf der Web-Verwaltungsseite gesendeten Verwaltungsbefehls, wobei die Web-Verwaltungsseite von dem Server an die hostseitige Vorrichtung gesendet wird, und
Ausführen (S205) des Verwaltungsbefehls durch eine Anwendungsprogrammierschnittstelle entsprechend dem Verwaltungsbefehl auf der mobilen Breitbandvorrichtung.

2. Verfahren nach Anspruch 1, das ferner umfasst:
Erkennen, ob von der hostseitigen Vorrichtung gesendete Daten Verwaltungsdaten oder Servicedaten sind, und
nachdem festgestellt wurde, dass die Daten Verwaltungsdaten sind, Senden der Verwaltungsdaten an den Server, oder
nachdem festgestellt wurde, dass die Daten Servicedaten sind, Verarbeiten der Servicedaten mithilfe eines Funknetzes.

3. Verfahren nach Anspruch 1, das ferner umfasst:
Senden eines Ausführungsergebnisses des Verwaltungsbefehls an den Server.

4. Mobile Breitbandvorrichtung, die umfasst:
eine Vorrichtungskennungs-Sendeeinheit (31), die dafür konfiguriert ist, eine lokale Vorrichtungskennung an einen Server zu senden, wobei die lokale Vorrichtungskennung eine IP-Adresse, ein Vorrichtungsmodell, eine Software- und eine Hardwareversionsnummer, eine "International Mobile Equipment Identity" und eine "International Mobile Subscriber Identity" umfasst;
eine Parameter-Aktualisierungseinheit (32), die dafür konfiguriert ist, einen kundenspezifischen Parameter der mobilen Breitbandvorrichtung gemäß einem von dem Server zurückgegebenen kundenspezifischen Parameter zu aktualisieren, wobei der kundenspezifische Parameter ein in dem Server voreingestellter Parameter ist und der lokalen Vorrichtungskennung der mobilen Breitbandvorrichtung entspricht;
eine Seitenanforderungs-Sendeeinheit (33), die dafür konfiguriert ist, eine Anforderung zum Öffnen einer Web-Verwaltungsseite an den Server zu senden;
eine Verwaltungsbefehl-Empfangseinheit (34), die dafür konfiguriert ist, einen von einer hostseitigen Vorrichtung auf der Web-Verwaltungsseite gesendeten Verwaltungsbefehl zu empfangen, wobei die Web-Verwaltungsseite von dem Server an die hostseitige Vorrichtung gesendet wird, und
eine Befehlsausführungseinheit (35), die dafür konfiguriert ist, den Verwaltungsbefehl mithilfe einer Anwendungsprogrammierschnittstelle entsprechend dem Verwaltungsbefehl auf der mobilen Breitbandvorrichtung auszuführen.

5. Mobile Breitbandvorrichtung nach Anspruch 4, die ferner umfasst:
eine Datenart-Erkennungseinheit, die dafür konfiguriert ist zu erkennen, ob von der hostseitigen Vorrichtung gesendete Daten Verwaltungsdaten oder Servicedaten sind;
eine Verwaltungsdaten-Verarbeitungseinheit, die konfiguriert ist zum: Senden der Verwaltungsdaten an den Server, nachdem festgestellt wurde, dass die Daten Verwaltungsdaten sind, und
eine Servicedaten-Verarbeitungseinheit, die konfiguriert ist zum: Verarbeiten der Servicedaten mithilfe eines Funknetzes, nachdem festgestellt wurde, dass die Daten Servicedaten sind.

6. Server-Arbeitsverfahren, das umfasst:
Empfangen einer von einer mobilen Breitbandvorrichtung gesendeten lokalen Vorrichtungskennung, wobei die lokale Vorrichtungskennung eine IP-Adresse, ein Vorrichtungsmodell, eine Software- und eine Hardwareversionsnummer, eine "International Mobile Equipment Identity" und eine "International Mobile Subscriber Identity" umfasst;
wenn gemäß der lokalen Vorrichtungskennung festgestellt wird, dass es erforderlich ist, einen kundenspezifischen Parameter an die mobile Breitbandvorrichtung zu senden, Zurückgeben des kundenspezifischen Parameters an die mobile Breitbandvorrichtung, wobei der kundenspezifische Parameter ein in dem Server voreingestellter Parameter ist und der lokalen Vorrichtungskennung der mobilen Breitbandvorrichtung entspricht;
Zurückgeben, gemäß einer von der mobilen Breitbandvorrichtung gesendeten Anforderung zum Öffnen einer Web-Verwaltungsseite, der Web-Verwaltungsseite an eine hostseitige Vorrichtung und
Empfangen von Verwaltungsdaten, die von der hostseitigen Vorrichtung gesendet und von der mobilen Breitbandvorrichtung weitergeleitet werden.

7. Verfahren nach Anspruch 6, das ferner umfasst:
Empfangen eines Verwaltungsbefehls, der von der hostseitigen Vorrichtung auf der Web-Verwaltungsseite gesendet und von der mobilen Breitbandvorrichtung weitergeleitet wird, und
Aufrufen einer Anwendungsprogrammierschnittstelle der mobilen Breitbandvorrichtung entsprechend einer IP-Adresse in der lokalen Vorrichtungskennung.

8. Verfahren nach Anspruch 7, das ferner umfasst:
Empfangen eines Ausführungsergebnisses des von der mobilen Breitbandvorrichtung gesendeten Verwaltungsbefehls und
Aktualisieren von Inhalten der Web-Verwaltungsseite auf Grundlage des Ausführungsergebnisses.

9. Server, der umfasst:
eine Vorrichtungskennungs-Empfangseinheit (51), die dafür konfiguriert ist, eine von einer mobilen Breitbandvorrichtung gesendete lokale Vorrichtungskennung zu empfangen, wobei die lokale Vorrichtungskennung eine IP-Adresse, ein Vorrichtungsmodell, eine Software- und eine Hardwareversionsnummer, eine "International Mobile Equipment Identity" und eine "International Mobile Subscriber Identity" umfasst;
eine Parameter-Sendeeinheit (52), die für folgendermaßen konfiguriert ist: Wenn gemäß der lokalen Vorrichtungskennung festgestellt wird, dass es erforderlich ist, einen kundenspezifischen Parameter an die mobile Breitbandvorrichtung zu senden Zurückgeben des kundenspezifischen Parameters an die mobile Breitbandvorrichtung, wobei der kundenspezifische Parameter ein in dem Server voreingestellter Parameter ist und der lokalen Vorrichtungskennung der mobilen Breitbandvorrichtung entspricht; eine Verwaltungsseiten-Sendeeinheit (53), die dafür konfiguriert ist, gemäß einer von der mobilen Breitbandvorrichtung gesendeten Anforderung zum Öffnen einer Web-Verwaltungsseite die Web-Verwaltungsseite an eine hostseitige Vorrichtung zurückzugeben, und
eine Verwaltungsdaten-Empfangseinheit (54), die dafür konfiguriert ist, Verwaltungsdaten zu empfangen, die von der hostseitigen Vorrichtung gesendet und von der mobilen Breitbandvorrichtung weitergeleitet werden.

## Revendications

1. Procédé de gestion d'un dispositif mobile à large bande, mis en oeuvre par le dispositif mobile à large bande, comprenant :
l'envoi (S201) d'un identificateur de dispositif local à un serveur, l'identificateur de dispositif local comprenant une adresse au protocole IP, un modèle de dispositif, des numéros de version logicielle et matérielle, une identité d'équipement mobile international et une identité d'abonné mobile international ;
la mise à jour (S202) d'un paramètre personnalisé du dispositif mobile à large bande en fonction d'un paramètre personnalisé renvoyé par le serveur, le paramètre personnalisé étant un paramètre prédéfini dans le serveur et correspondant à l'identificateur de dispositif local du dispositif mobile à large bande ;
l'envoi (S203) d'une demande pour ouvrir une page de gestion Web sur le serveur ;
la réception (S204) d'un ordre de gestion envoyé par un dispositif du côté hôte sur la page de gestion Web, ladite page de gestion Web étant envoyée par le serveur au dispositif du côté hôte ; et
l'exécution (S205) de l'ordre de gestion par l'intermédiaire d'une interface de programmation d'application correspondant à l'ordre de gestion sur le dispositif mobile à large bande.

2. Procédé selon la revendication 1, comprenant en outre :
l'identification de ce que les données envoyées par le dispositif du côté hôte sont des données de gestion ou des données de service ; et
l'envoi des données de gestion au serveur, après que les données ont été déterminées comme étant des données de gestion, ou
le traitement des données de service par l'intermédiaire d'un réseau radio, après que les données ont été déterminées comme étant des données de service.

3. Procédé selon la revendication 1, comprenant en outre :
l'envoi d'un résultat d'exécution de l'ordre de gestion au serveur.

4. Dispositif mobile à large bande comprenant :
une unité d'envoi d'identificateur de dispositif (31) configurée pour envoyer un identificateur de dispositif local à un serveur, l'identificateur de dispositif local comprenant une adresse au protocole IP, un modèle de dispositif, des numéros de version logicielle et matérielle, une identité d'équipement mobile international et une identité d'abonné mobile international ;
une unité de mise à jour de paramètre (32) configurée pour mettre à jour un paramètre personnalisé du dispositif mobile à large bande en fonction d'un paramètre personnalisé renvoyé par le serveur, le paramètre personnalisé étant un paramètre prédéfini dans le serveur et correspondant à l'identificateur de dispositif local du dispositif mobile à large bande ;
une unité d'envoi de demande de page (33) configurée pour envoyer au serveur une demande pour ouvrir une page de gestion Web ;
une unité de réception d'ordre de gestion (34) configurée pour recevoir un ordre de gestion envoyé par un dispositif du côté hôte sur la page de gestion Web, ladite page de gestion Web étant envoyée par le serveur au dispositif du côté hôte ; et
une unité d'exécution d'ordre (35) configurée pour exécuter l'ordre de gestion par l'intermédiaire d'une interface de programmation d'application correspondant à l'ordre de gestion sur le dispositif mobile à large bande.

5. Dispositif mobile à large bande selon la revendication 4, comprenant en outre :
une unité d'identification de type de données, configurée pour identifier si les données envoyées par le dispositif du côté hôte sont des données de gestion ou des données de service ;
une unité de traitement de données de gestion configurée pour envoyer au serveur les données de gestion après que les données ont été déterminées comme étant des données de gestion ; et
une unité de traitement de données de service configurée pour traiter les données de service par l'intermédiaire d'un réseau radio après que les données ont été déterminées comme étant des données de service.

6. Procédé de fonctionnement de serveur, comprenant :
la réception d'un identificateur de dispositif local envoyé par un dispositif mobile à large bande, l'identificateur de dispositif local comprenant une adresse au protocole IP, un modèle de dispositif, des numéros de version logicielle et matérielle, une identité d'équipement mobile international et une identité d'abonné mobile international ;
le renvoi, lors de la détermination, en fonction de l'identificateur de dispositif local, de ce qu'il est nécessaire d'envoyer un paramètre personnalisé au dispositif mobile à large bande, du paramètre personnalisé au dispositif mobile à large bande, le paramètre personnalisé étant un paramètre prédéfini dans le serveur et correspondant à l'identificateur de dispositif local du dispositif mobile à large bande ;
le renvoi, en fonction d'une demande envoyée par le dispositif mobile à large bande pour ouvrir une page de gestion Web, de la page de gestion Web à un dispositif du côté hôte ; et
la réception de données de gestion qui sont envoyées par le dispositif du côté hôte et transférées par le dispositif mobile à large bande.

7. Procédé selon la revendication 6, comprenant en outre :
la réception d'un ordre de gestion qui est envoyé par le dispositif du côté hôte sur la page de gestion Web et qui est transféré par le dispositif mobile à large bande ; et
l'invocation d'une interface de programmation d'application du dispositif mobile à large bande correspondant à une adresse au protocole IP dans l'identificateur de dispositif local.

8. Procédé selon la revendication 7, comprenant en outre :
la réception d'un résultat de l'exécution de l'ordre de gestion envoyé par le dispositif mobile à large bande ; et
la mise à jour du contenu de la page de gestion Web sur la base du résultat d'exécution.

9. Serveur comprenant :
une unité de réception d'identificateur de dispositif (51) configurée pour recevoir un identificateur de dispositif local envoyé par un dispositif mobile à large bande, l'identificateur de dispositif local comprenant une adresse au protocole IP, un modèle de dispositif, des numéros de version logicielle et matérielle, une identité d'équipement mobile international et une identité d'abonné mobile international,
une unité d'envoi de paramètre (52) configurée pour renvoyer, lors de la détermination, en fonction de l'identificateur de dispositif local, de ce qu'il est nécessaire d'envoyer un paramètre personnalisé au dispositif mobile à large bande, le paramètre personnalisé au dispositif mobile à large bande, le paramètre personnalisé étant un paramètre prédéfini dans le serveur et correspondant à l'identificateur de dispositif local du dispositif mobile à large bande ;
une unité d'envoi de page de gestion (53) configurée pour renvoyer, en fonction d'une demande envoyée par le dispositif mobile à large bande pour ouvrir une page de gestion Web, la page de gestion Web à un dispositif du côté hôte ; et
une unité de réception de données de gestion (54) configurée pour recevoir des données de gestion qui sont envoyées par le dispositif du côté hôte et transférées par le dispositif mobile à large bande.
